# EUROPEAN PATENT SPECIFICATION

(11) **EP 2 890 100 B1**
(45) Date of publication and mention of the grant of the patent: **16.12.2020**
(21) Application number: 14198427.8
(22) Date of filing: 17.12.2014
(51) Int. Cl.: H04N 1/00

(54) **Image processing apparatus**
Bildverarbeitungsvorrichtung
Appareil de traitement d'images

(30) Priority: 27.12.2013 JP 2013271375
(43) Date of publication of application: 01.07.2015
(73) Proprietor: Kyocera Document Solutions Inc., Osaka-shi, Osaka 540-8585 (JP)
(72) Inventor: Harada, Hiroyuki, Osaka-shi, Osaka 540-8585 (JP)
(74) Representative: Viering, Jentschura & Partner mbB Patent- und Rechtsanwälte

(56) References cited:
- JP-A- H08 161 473
- US-A- 5 126 858
- US-A- 5 438 430
- US-A1- 2004 190 772
- US-A1- 2006 289 625
- US-A1- 2008 270 879
- US-A1- 2013 083 176

## Description

### BACKGROUND

This disclosure relates to an image processing apparatus.

Some systems use a business management server that extracts specific information from images of application forms using suitable clipping patterns for various types of business document formats.

US 2008/0270879 A1 discloses a computer-readable medium that stores a program causing a computer to execute document processing. The document processing includes: acquiring document data including one or more pieces of attribute information; and acquiring attribute extraction information of each attribute information. Each attribute extraction information includes (i) extraction method information indicating an extraction method for extracting the corresponding attribute information from the document data, and (ii) position information that indicates a position of the corresponding attribute information in the document data, and corresponds to the extraction method indicated by the extraction method information for the corresponding attribute information. The document processing further includes registering attribute information that is extracted from the document data based on the attribute extraction information, as the attribute information of the document data.

US 2013/083176 A1 discloses an overhead scanner device including an image photographing unit, and a control unit, wherein the control unit includes an image acquiring unit that controls the image photographing unit to acquire an image of a document including at least an indicator provided by a user, a specific-point detecting unit that detects two specific points each determined based on the distance from the gravity center of an indicator to the end of the indicator, from the image acquired by the image acquiring unit, and an image cropping unit that crops the image acquired by the image acquiring unit into a rectangle with opposing corners at the two points detected by the specific-point detecting unit.

JP H08161473 A discloses a tag information processing unit that extracts and processes the information relating to a tag with a marker and a code of attribute information from a document comprising a read means, a recognition means, and a storage means.

### SUMMARY

The present invention provides an image processing apparatus as defined in claim 1. Further embodiments of the image processing apparatus of the present invention are described in the dependent claims. An image processing apparatus according to an aspect of the present disclosure includes an additional-object registration unit and a read-image processing unit. A setting form contains: (a) an additional-object specification field used by a user to present an additional object that is placed onto a document in order to specify an extract area to be extracted from an image read from the document; and (b) a processing specification field used by the user to select processing to be performed on information obtained from the extract area. The additional-object registration unit identifies an image of the additional object presented in the additional-object specification field and the processing selected in the processing specification field on the read image of the setting form. The additional-object registration unit establishes an association between the image of the additional object and the processing, and registers the image and the processing. The read-image processing unit searches the read image of the document for the image of the additional object. The read-image processing unit performs the processing associated with the image of the additional object on the information obtained from the extract area specified by the image of the additional object.

### BRIEF DESCRIPTION OF THE DRAWINGS

FIG. 1 is a block diagram showing the configuration of an image processing apparatus according to an embodiment of the disclosure.
FIG. 2 illustrates an example of a setting form according to the first embodiment.
FIG. 3 illustrates an example of the setting form with additional objects placed and check boxes marked by a user to specify processing to be performed.
FIG. 4 illustrates an example of a document.
FIG. 5 illustrates an example of the document with registered additional objects placed thereon.
FIG. 6 illustrates an example of a registration information sheet.
FIG. 7 illustrates an example of specification of an extract area by transparent sticky notes.
FIG. 8 illustrates an example of the setting form according to the fourth embodiment.
FIG. 9 illustrates an example of a condition sheet.

### DETAILED DESCRIPTION

With reference to the accompanying drawings, embodiments of the present disclosure will be described below.

### First Embodiment

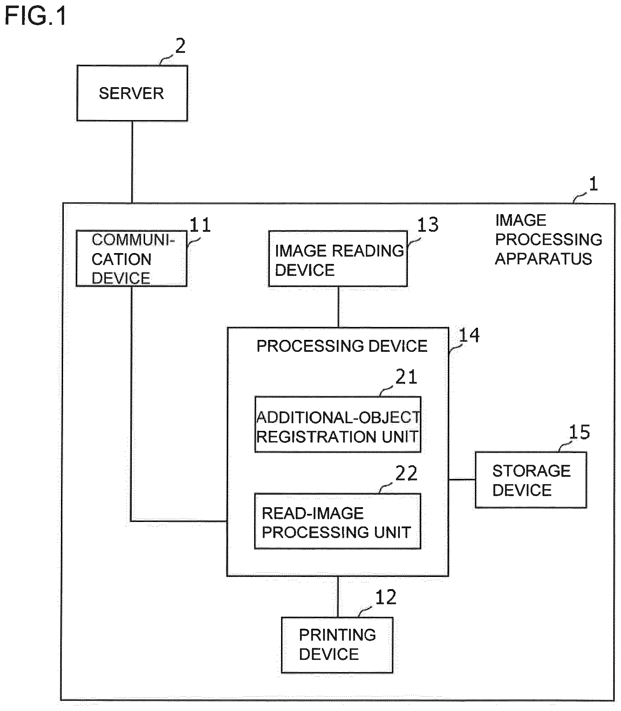

FIG. 1 is a block diagram showing the configuration of an image processing apparatus according to the first embodiment of the disclosure. The image processing apparatus 1 shown in FIG. 1 is a multifunctional peripheral including a communication device 11, a printing device 12, an image reading device 13, a processing device 14, and a storage device 15.

The communication device 11 is connectable to a server 2 via a network and performs data communications using a predetermined communications protocol. The server 2 is used to perform character recognition processing to read handwritten characters.

The printing device 12 is an internal device to print an image of an original document onto a printer sheet in, for example, an electrophotographic method. The printing device 12 subjects original image data to predetermined image processing, such as rasterization, color conversion, and screen processing, to produce output image data that is in turn printed out. The printing device 12 is used to print various kinds of forms and sheets which will be described later.

The image reading device 13 is an internal device that optically reads an image from an original document (various forms and sheets described below) to produce image data of the original document image.

The processing device 14 is a computer equipped with a central processing unit (CPU), a read only memory (ROM), a random access memory (RAM) and other components and functionally operates as various processing units by loading a program stored in the storage device 15, such as the ROM, into the RAM and executing the program with the CPU. The storage device 15 is a nonvolatile storage device that stores data, programs, etc.

The processing device 14 functions as an additional-object registration unit 21 and a read-image processing unit 22.

A setting form includes: (a) an additional-object specification field used by a user to present an additional object that is placed onto a document to specify an extract area to be extracted from an image read from the document; and (b) a processing specification field used by the user to select processing to be performed on information obtained from the extract area. The additional-object registration unit 21 identifies an image of the additional object presented in the additional-object specification field and the processing selected in the processing specification field on the read image of the setting form, establishes an association between the image of the additional object and the processing, and registers the image and processing associated therewith.

The read-image processing unit searches the read image of the document for the image of the additional object and performs the processing associated with the image of the additional object on information obtained from the extract area specified by the image of the additional object.

In the first embodiment, a single setting form includes a plurality of additional-object specification fields and a plurality of processing specification fields associated with the additional-object specification fields, respectively. The additional-object registration unit 21 identifies a plurality of images of additional objects presented in the additional-object specification fields and a plurality of types of processing selected in the processing specification fields on the read image of the setting form, establishes associations between each of the images of the additional objects and the processing, and registers the images and the processing associated therewith. Then, the read-image processing unit 22 searches the read image of the document for the registered images of the additional objects and performs processing associated with the detected images of the additional objects on information obtained from extract areas specified by the images of the detected additional objects.

In the first embodiment, the additional objects are sticky notes (repositionable notes) having a predetermined shape, a color and a pattern. The read-image processing unit 22 searches the read image of the document for the images of the additional objects by pattern-matching.

In addition, the additional objects in the first embodiment may be sticky notes having the same shape, but different patterns (e.g., sequential numbers, 1, 2, 3... or alphabetical letters, a, b, c...).

Furthermore, the aforementioned "processing" in the first embodiment includes: (a) creation of a file name of a file for the read image of the document based on the information extracted from the extract areas; (b) character recognition processing performed on the information extracted from the extract areas; and (c) creation of metadata of the file based on the information extracted from the extract areas. The metadata includes various types of attribute data contained in the files.

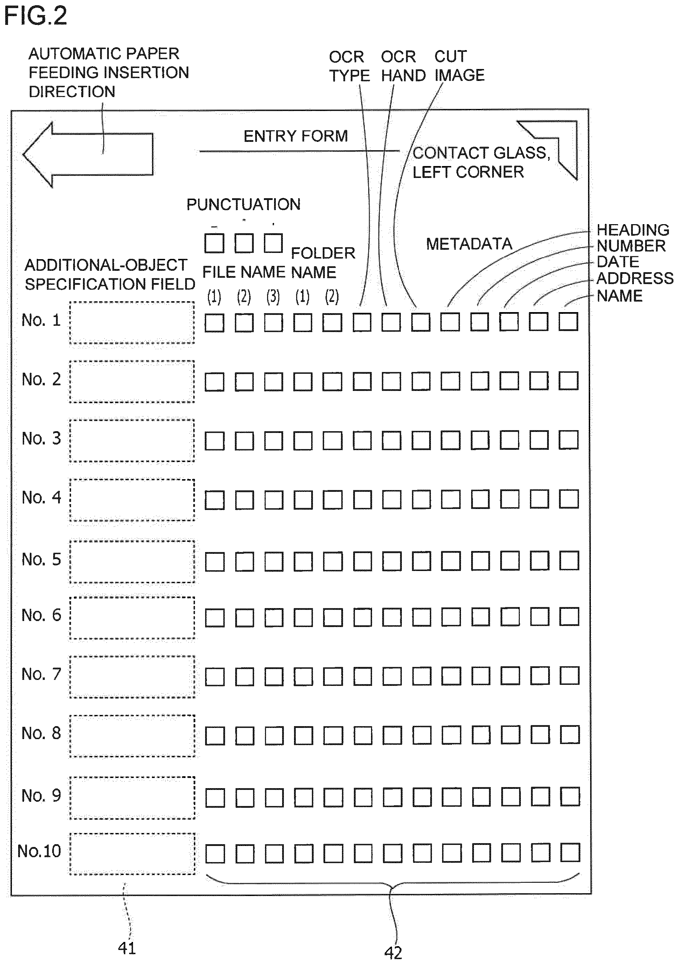

FIG. 2 illustrates an example of the setting form according to the first embodiment.

The setting form shown in FIG. 2 includes a plurality of additional-object specification fields 41 and a plurality of check box arrays 42 that are processing specification fields associated with the additional-object specification fields 41.

Each of the check box arrays 42 includes three check boxes ((1), (2), (3) of FILE NAME) to create a file name, two check boxes ((1), (2) of FOLDER NAME) to create a folder name, a check box to select typewritten character recognition processing (OCR TYPE), a check box to select handwritten character recognition processing (OCR HAND), a check box to cut out an image in the extract areas (CUT IMAGE), and five check boxes (HEADING, NUMBER, DATE, ADDRESS, and NAME of METADATA) to create metadata (HEADING, NUMBER, DATE, ADDRESS, and NAME). If a checkmark is placed in the check box of "OCR HAND", the read-image processing unit 22 transmits an image in an extract area to the server 2 through the communication device 11, causes the server 2 to perform the handwritten character recognition processing on the image in the extract area, and receives the processing results from the server 2.

The check box (i) (i=1, 2, 3) of FILE NAME is used to designate text obtained from the corresponding extract area as the i-th word of a file name, while the check box (i) (i=1, 2) of FOLDER NAME is used to designate text obtained from the corresponding extract area as the i-th word of a folder name. The i-th word and the (i-th+1) word are linked with a punctuation character that is selected by a user who places a checkmark in a check box for selecting a punctuation character in the setting form.

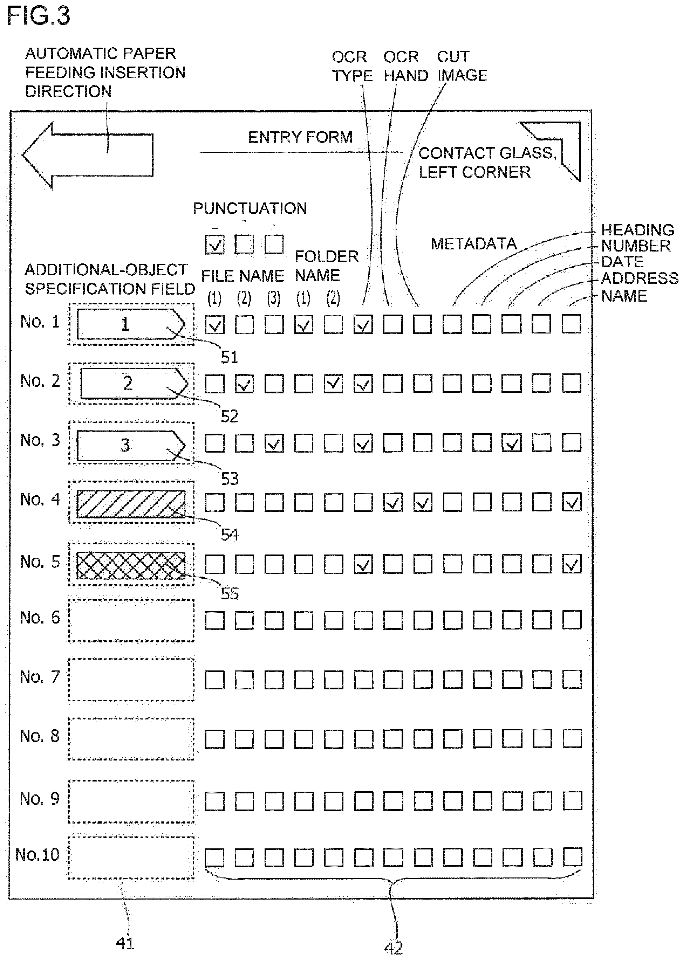

FIG. 3 illustrates an example of the setting form with additional objects placed and check boxes marked by a user to specify processing to be performed. Specifically, the user places desired additional objects (i.e., sticky notes in this embodiment) in the additional-object specification fields to register the additional objects and places checkmarks in check boxes to perform desired processing on information (text, image, etc.) obtained from extract areas extracted by the additional objects.

For example, FIG. 3 shows a setting form with an additional object 51 placed in an additional-object specification field 41 and checkmarks in check box (1) of FILE NAME, in check box (1) of FOLDER NAME, and in the check box of OCR TYPE. Thus, an image obtained from an extract area specified by the additional object 51 is subjected to typewritten character recognition processing, and the text resulted from the processing is used as the first word of the file name and the first word of the folder name of the document image.

The setting form shown in FIG. 3 also has additional objects 52 to 55 placed in other additional-object specification fields 41 and checkmarks placed in check boxes of check box arrays 42 associated with the additional objects.

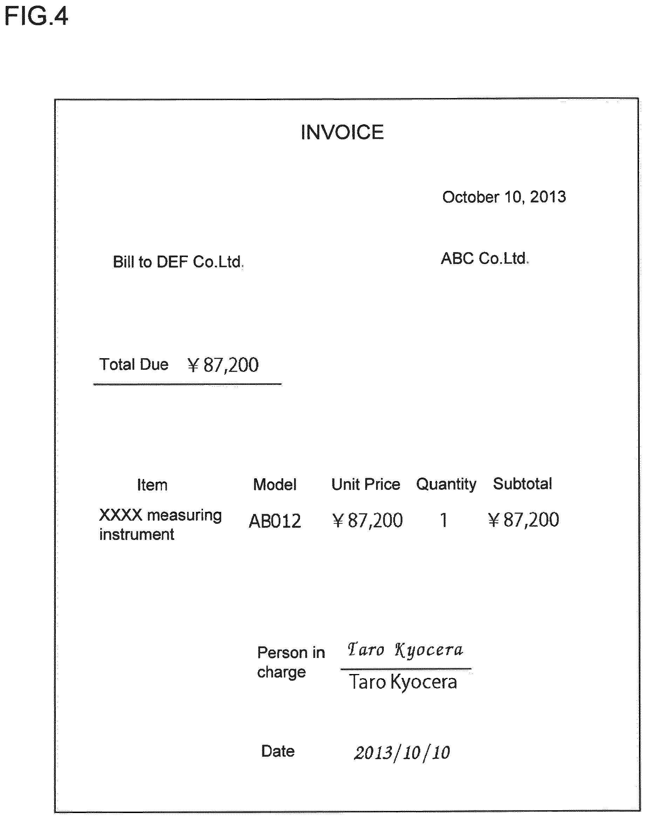

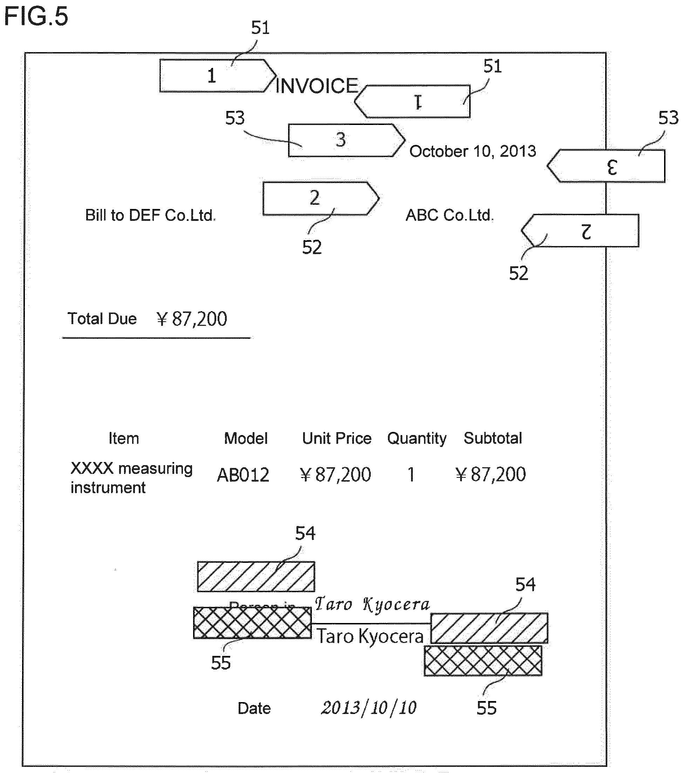

FIG. 4 illustrates an example of the document. FIG. 5 illustrates an example of the document with registered additional objects placed thereon.

As shown in FIGS. 4 and 5, the additional objects 51 specify an extract area so as to include a character string "INVOICE", which is the title of the document, the additional objects 52 specify an extract area so as to include a character string of a name of an issuer of the document, the additional objects 53 specify an extract area so as to include a character string of date, the additional objects 54 specify an extract area so as to include a handwritten signature of a person in charge, and the additional objects 55 specify an extract area so as to include a character string of a typewritten name of the person in charge.

Next, the operation of the image processing apparatus will be described.

### (1) Registration of Additional Object Used to Specify Extract Area in Document

In response to predetermined user operation, the additional-object registration unit 21 causes the printing device 12 to print out a setting form. Since an image data of the setting form is stored in the storage device 15 in advance, the setting form is printed out from the image data. Then, a user uses the printed setting form as shown in FIG. 2 to place desired additional objects in additional-object specification fields 41 and checkmarks in check boxes of check box arrays 42 as shown in FIG. 3, for example. Then, the user operates the image processing apparatus 1 to read the setting form with the additional objects placed in the additional-object specification fields 41 and the checkmarks placed in the check boxes of the check box arrays 42 through the image reading device 13.

In the image processing apparatus 1, the image reading device 13 produces image data of the read image of the setting form with the additional objects placed in the additional-object specification fields 41 and the checkmarks placed in the check boxes of the check box arrays 42. The additional-object registration unit 21 refers to the image data to extract images of the additional objects in the additional-object specification fields 41, while identifying check boxes with the checkmarks in the check box arrays 42 associated with the additional objects to identify processing specified by the user based on the identified check boxes. The additional-object registration unit 21 establishes associations between the images of the additional objects and the processing and stores the images and processing in the storage device 15.

Through the procedure, the user's desired additional objects and the associated processing are registered.

### (2) Document Processing

After registration of the additional objects and processing associated therewith, for example, the user uses a document to be read as shown in FIG. 4 to place additional objects on the document to specify extract areas as shown in FIG. 5. Then, the user operates the image processing apparatus 1 to read the document with the additional objects placed thereon through the image reading device 13.

In the image processing apparatus 1, the image reading device 13 produces image data of the read image of the document with the additional objects placed thereon. The read-image processing unit 22 refers to the image data to search the read image of the document for the registered images of the additional objects by pattern-matching.

Upon detecting two additional object images of one kind, the read-image processing unit 22 identifies an extract area enclosed by the two additional object images. For example, the extract area identified is a rectangle with a diagonal line connecting the two additional object images at the shortest distance. Alternatively, if the images of the additional objects are in a predetermined shape, like a rectangle, the extract area may be configured to be a rectangle with a diagonal line connecting predetermined vertices of the two additional object images at the shortest distance.

Then, the read-image processing unit 22 extracts an image in the identified extract area and performs specified processing on the image in the extract area (e.g., character recognition, creation of file name and metadata).

For example, if the additional objects and processing on the setting form as shown in FIG. 3 are registered and the extract areas are specified by the additional objects 51 to 55 as shown in FIG. 5, the file name for the read image of the document is determined as "INVOICE_ABC Co. Ltd._20131010.pdf", and the folder name is determined as "INVOICE/ABC Co. Ltd./". In this embodiment, if date "October 10, 2013" is extracted through character recognition processing, the date is automatically translated into a string of numbers. Then, the read image of the document is saved under the file name of "INVOICE_ABC Co. Ltd._20131010.pdf" in a folder named "INVOICE/ABC Co. Ltd./" in the storage device 15.

According to the above-described first embodiment, the read image of the setting form includes: (a) the additional-object specification fields used by a user to present the additional objects that are placed onto a document to specify extract areas to be extracted from the image read from the document; and (b) the processing specification fields used by the user to select processing to be performed on information obtained from the extract areas. The additional-object registration unit 21 identifies the images of the additional objects presented in the additional-object specification fields and the processing selected in the processing specification fields, establishes associations between the images of the additional objects and the processing, and registers the images of the identified additional objects and the processing associated therewith. The read-image processing unit 22 searches the read image of the document for the images of the additional objects and performs the processing associated with the image of the additional objects on the information obtained from the extract areas specified by the images of the additional objects.

Thus, the user can set a position to extract particular information from various types of documents in a suitable way for the respective document formats.

### Second Embodiment

An image processing apparatus 1 according to the second embodiment includes a function of outputting a registration information sheet from a printing device 12 or other output units in response to a user's predetermined operation after the additional-object registration unit 21 registers images of additional objects and processing associated with the additional objects, in addition to functions the same as those of the image processing apparatus 1 of the first embodiment.

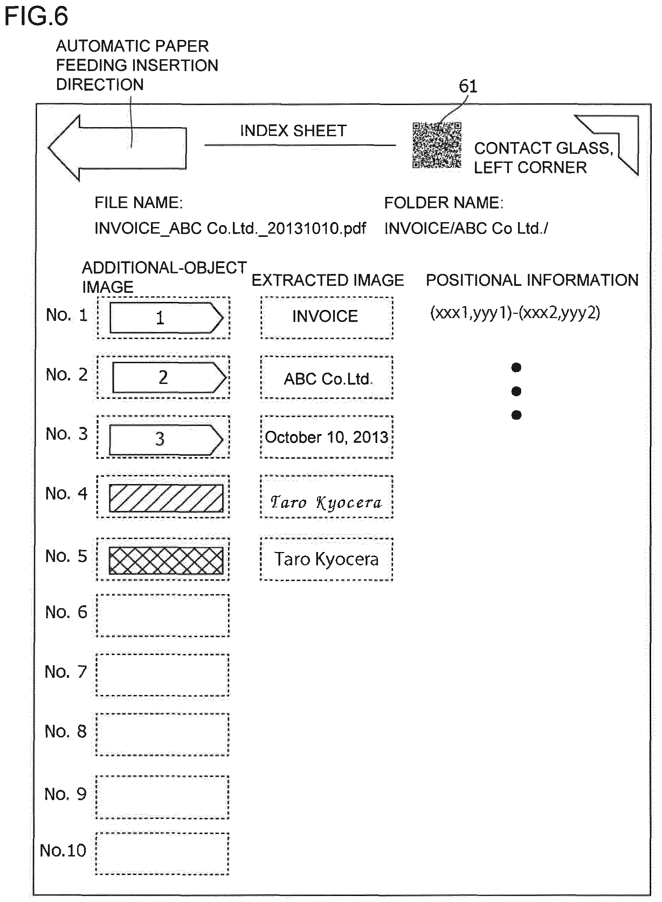

FIG. 6 illustrates an example of the registration information sheet. The registration information sheet includes images of additional objects and the positional information of the aforementioned extract areas associated with the images of the additional objects. In addition, the registration information sheet in the second embodiment includes a two-dimensional code 61 (QR code (trademark) in this embodiment) containing the positional information of the extract areas and information about processing associated with the extract areas. The registration information sheet still includes images (extracted images) in the extract areas obtained from the read image of a document.

In the case where the image processing apparatus 1 of the second embodiment is equipped with a key (e.g., a shortcut key) that performs a predetermined function in response to a user's single operation, the key may be assigned to an output operation of the registration information sheet as the function. This allows the user to print out the registration information sheet from a simple apparatus and to see the images (extracted images) in the extract areas obtained from the read image of the document.

The other configurations of the image processing apparatus 1 of the second embodiment are the same as those of the first embodiment, and therefore the explanation will not be reiterated.

### Third Embodiment

An image processing apparatus 1 according to the third embodiment enables use of a plurality of transparent sticky notes in different colors as additional objects. In the third embodiment, the read-image processing unit 22 searches for the images of the additional objects by pattern-matching in consideration of the color mixture of the transparent sticky notes.

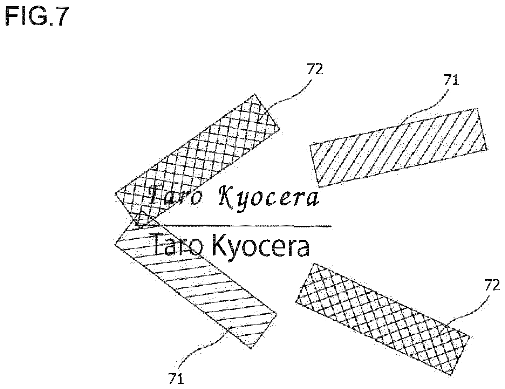

FIG. 7 illustrates an example of specification of extract areas by transparent sticky notes. In FIG. 7, the transparent sticky notes 71, 72 have different colors from each other. For example, as shown in FIG. 7, if the transparent sticky notes 71 and 72 overlap one another, the color of the overlapped part is a mixed color of the colors of the transparent sticky note 71 and transparent sticky note 72. Thus, the read-image processing unit 22 performs pattern-matching to search the read image for additional objects (transparent sticky notes 71, 72) including the mixed color part.

The other configurations of the image processing apparatus 1 of the third embodiment are the same as those of the first and second embodiments, and therefore the explanation will not be reiterated.

### Fourth Embodiment

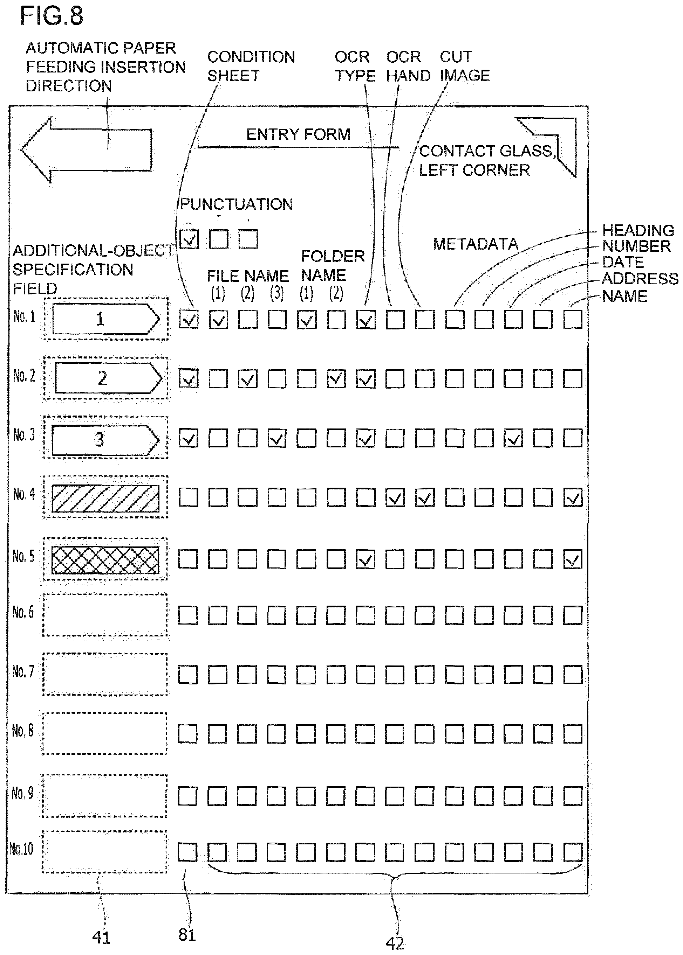

FIG. 8 illustrates an example of a setting form according to the fourth embodiment.

In the fourth embodiment, the setting form includes a translation specification field used by a user to select whether to use a translation rule to change a plurality of similar character strings in an extract area into a single character string. The translation specification field in the fourth embodiment is check boxes 81 in FIG. 8.

In the image processing apparatus 1 of the fourth embodiment, when the additional-object registration unit 21 detects that the translation rule is specified to be used in a translation specification field, the additional-object registration unit 21 acquires the translation rule, establishes an association between the translation rule and an image of an additional object associated with an extract area, and registers the image of the additional object and the translation rule associated therewith.

If at least one check box 81 is marked in the fourth embodiment, a user operates the image processing apparatus 1 to cause the image reading device 13 to read a condition sheet on which translation rules including the aforementioned translation rule are written and causes the additional-object registration unit 21 to identify the translation rule from the read image of the condition sheet or text information obtained from the read image through character recognition processing.

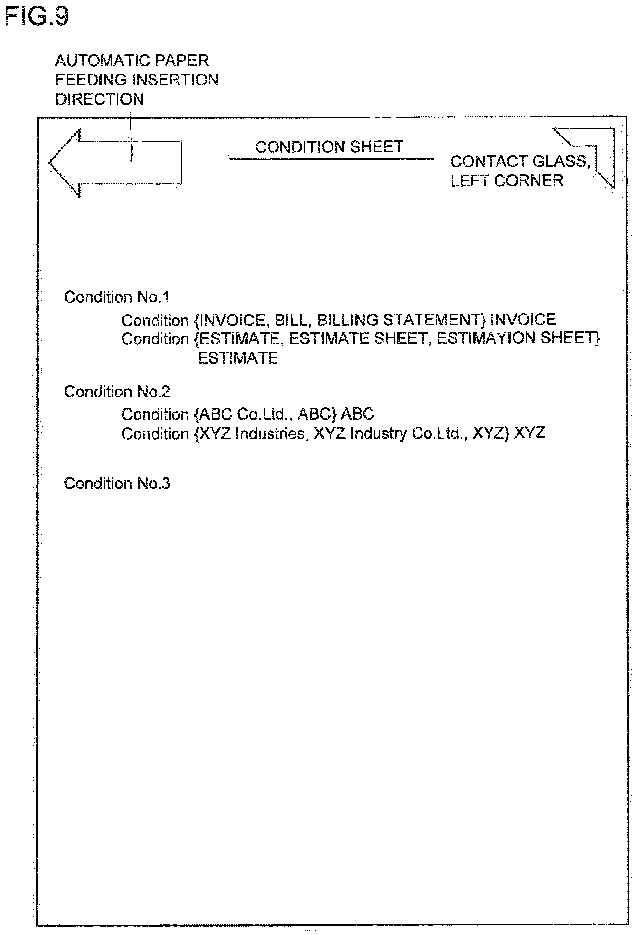

FIG. 9 illustrates an example of the condition sheet. The condition sheet shown in FIG. 9 includes a statement of conditions (translation rules) associated with the first word and the second word of the file name, respectively. For example, "Condition {ABC Co. Ltd., ABC} ABC" denotes that if the character string obtained by character recognition processing from the image in the extract area is "ABC Co. Ltd." or "ABC", "ABC" is used as the second word of the file name.

Then, the read-image processing unit 22 translates the character string obtained from the extract area under the translation rule associated with the extract area and performs the aforementioned processing (e.g., creation of a file name) on the translated character string.

Accordingly, even if there are different character strings of the same meaning, the character strings are replaced with a single character string that is in turn subjected to subsequent processing.

The other configurations of the image processing apparatus 1 of the fourth embodiment are the same as those of the first to third embodiments, and therefore the explanation will not be reiterated.

Although the foregoing embodiments are preferred examples of the present disclosure, it is to be noted that the present disclosure is not limited by the embodiments, and that various modifications and changes can be made without departing from the scope of protection as defined by the claims.

For example, the additional objects are sticky notes through the first to fourth embodiments; however, the additional objects can be characters or symbols handwritten with ink or graphite of a pen, a pencil or other writing implements.

In addition, the pattern-matching performed in the first to fourth embodiments can detect inclined additional objects, and therefore users are allowed to place the additional objects at an angle.

The present disclosure is applicable to, for example, multifunctional peripherals.

## Claims

1. An image processing apparatus (1) comprising:
an additional-object registration unit (21) that is configured to refer to an image read from a setting form,
the setting form including
(a) an additional-object specification field (41) configured to be used by a user to present an additional object (51 - 55) that is placed onto a document in order to specify an extract area to be extracted from an image read from the document, and
(b) a processing specification field (42) configured to be used by the user to specify processing to be performed on information obtained from the extract area,
to identify an image of the additional object (51 - 55) presented in the additional-object specification field (41) and processing specified in processing specification field (42) on the read image of the setting form, to establish an association between the image of the additional object (51 - 55) and the processing, and to register the image of the additional object (51 - 55) and the processing associated therewith; and
a read-image processing unit (22) that is configured to search the read image of the document for the image of the additional object (51 - 55) and to perform the processing associated with the image of the additional object (51 - 55) on the information obtained from the extract area specified by the image of the additional object (51 - 55), wherein
the additional object (51 - 55) is a sticky note having a predetermined shape, color and pattern,
the read-image processing unit (22) is configured to search the read image of the document for the image of the additional object (51 - 55) by pattern-matching,
the setting form includes a plurality of additional-object specification fields (41) including the additional-object specification field (41) and a plurality of processing specification fields (42) including the processing specification field (42), the additional-object specification fields (41) being associated with the processing specification fields (41), respectively,
the additional-object registration unit (21) is configured to identify images of the additional objects (51 - 55) presented in the additional-object specification fields (41) and the processing selected by the processing specification fields (42) on the read image of the setting form, to establish associations between the images of the additional objects (51 - 55) and processing, and to register the images of the additional objects (51 - 55) and the processing associated therewith,
the read-image processing unit (22) is configured to search the read image of the document for the images of the additional objects (51 - 55) and to perform the processing associated with the images of the additional objects (51 - 55) on information obtained from the extract areas specified by the images of the additional objects (51 - 55),
the plurality of additional objects (51 - 55) are transparent sticky notes having different colors, and
the read-image processing unit (22) is configured to search for the images of additional objects (51 - 55) in consideration of the color mixture of the transparent sticky notes.

2. The image processing apparatus (1) according to claim 1, wherein
the read-image processing unit (22) is configured to identify the extract area enclosed by two additional object (51 - 55) images upon detecting the two additional object (51 - 55) images of one kind.

3. The image processing apparatus (1) according to claim 1, wherein
the plurality of additional objects (51 - 55) are sticky notes having the same shape, but different patterns.

4. The image processing apparatus (1) according to any one of claims 1 to 3, wherein
the processing is at least one of: (a) creation of a file name of a file for the read image of the document based on information extracted from the extract area; (b) character recognition processing performed on the information extracted from the extract area; and (c) creation of metadata of the file based on the information extracted from the extract area.

5. The image processing apparatus (1) according to claim 1, wherein
after the additional-object registration unit (21) establishes an association between the image of the additional object (51 - 55) and the processing and registers the image and processing associated therewith, a registration information sheet containing the image of the additional object (51 - 55) and positional information of the extract area is output.

6. The image processing apparatus (1) according to claim 5, wherein
the registration information sheet includes a two-dimensional code containing the positional information of the extract area and information about the processing associated with the extract area.

7. The image processing apparatus (1) according to claim 5, wherein
the registration information sheet includes an image in the extract area obtained from the read image of the document.

8. The image processing apparatus (1) according to claim 7, further comprising:
a key used to execute a predetermined function in response to a user's single operation, wherein
the function assigned to the key is an output operation of the registration information sheet.

9. The image processing apparatus (1) according to claim 1, wherein
the setting form includes a translation specification field (81) configured to be used by a user to specify whether to use a translation rule to translate a plurality of similar character strings in the extract area into a single character string,
when the additional-object registration unit (21) detects that the translation specification field (81) specifies to use the translation rule, the additional-object registration unit (21) is configured to acquire the translation rule, to establish an association between the translation rule and the image of the additional object (51 - 55) associated with the extract area, and to register the translation rule, and
the read-image processing unit (22) is configured to translate the character string obtained from the extract area under the translation rule associated with the extract area.

10. The image processing apparatus (1) according to any one of claims 1 to 9, further comprising:
a printing device (12) that is configured to print the setting form, and an image reading device (13) that is configured to obtain the image read from the setting form with the additional object (51 - 55) presented thereon and the image read from the document with the additional object (51 - 55) placed thereon.

## Patentansprüche

1. Bildverarbeitungsvorrichtung (1), aufweisend:
eine Zusatzobjekt-Registrierungseinheit (21), die eingerichtet ist sich auf eine eingelesene Abbildung aus einer Einstellungs-Anordnung zu beziehen,
die Einstellungs-Anordnung enthaltend
(a) ein Zusatzobjekt-Spezifikationsfeld (41), das eingerichtet ist von einem Benutzer verwendet zu werden, um ein zusätzliches Objekt (51-55) zu präsentieren, das auf ein Dokument gelegt wird, um einen Extraktionsbereich zu spezifizieren, der aus einer eingelesenen Abbildung aus dem Dokument extrahiert werden soll, und
(b) ein Verarbeitungs-Spezifikationsfeld (42), das eingerichtet ist von dem Benutzer verwendet zu werden, um eine Verarbeitung zu spezifizieren, die mit Informationen durchgeführt werden soll, die aus dem Extraktionsbereich erhalten wurden,
um eine Abbildung des zusätzlichen Objekts (51-55), das in dem Zusatzobjekt-Spezifikationsfeld (41) dargestellt ist, und eine Verarbeitung, die in dem Verarbeitungs-Spezifikationsfeld (42) auf der eingelesenen Abbildung spezifiziert ist, zu identifizieren; und
um eine Zuordnung zwischen der Abbildung des zusätzlichen Objekts (51-55) und der Verarbeitung herzustellen und die Abbildung des zusätzlichen Objekts (51-55) und die damit verbundene Verarbeitung zu registrieren; und
eine Eingelesene-Abbildung-Verarbeitungseinheit (22), die eingerichtet ist die eingelesene Abbildung des Dokuments nach der Abbildung des zusätzlichen Objekts (51-55) zu durchsuchen und um die der Abbildung des zusätzlichen Objekts (51-55) zugeordnete Verarbeitung auf Grundlage von Informationen durchzuführen, die aus dem durch die Abbildung des zusätzlichen Objekts (51-55) festgelegten Extraktionsbereichs erhalten wurden, wobei
das zusätzliche Objekt (51-55) ein Haftzettel mit einer vorbestimmten Form, Farbe und Muster ist,
die Eingelesene-Abbildung-Verarbeitungseinheit (22) eingerichtet ist die eingelesene Abbildung des Dokuments nach der Abbildung des zusätzlichen Objekts (51-55) durch Muster-Abgleich zu durchsuchen,
die Einstellungs-Anordnung enthaltend eine Mehrzahl von Zusatzobjekt-Spezifikationsfeldern (41), einschließlich des Zusatzobjekt-Spezifikationsfeldes (41) und eine Mehrzahl von Verarbeitungs-Spezifikationsfeldern (42), einschließlich des Verarbeitungs-Spezifikationsfeldes (42), wobei die Zusatzobjekt-Spezifikationsfelder (41) jeweils den Verarbeitungs-Spezifikationsfeldern (41) zugeordnet sind,
die Zusatzobjekt-Registrierungseinheit (21) eingerichtet ist die Abbildungen der zusätzlichen Objekte (51-55) zu identifizieren, die in den Zusatzobjekt-Spezifikationsfeldern (41) dargestellt werden, und die Verarbeitung zu identifizieren, die durch die Verarbeitungs-Spezifikationsfelder (42) auf der eingelesenen Abbildung der Einstellungs-Anordnung ausgewählt wurde, um Zuordnungen zwischen den Abbildungen der zusätzlichen Objekte (51-55) und der Verarbeitung herzustellen und die Abbildungen der zusätzlichen Objekte (51-55) und die damit verbundene Verarbeitung zu registrieren,
die Eingelesene-Abbildung-Verarbeitungseinheit (22) eingerichtet ist die eingelesene Abbildung des Dokuments nach den Abbildungen der zusätzlichen Objekte (51 - 55) zu durchsuchen und die mit den Abbildungen der zusätzlichen Objekte (51-55) zugeordnete Verarbeitung auf Grundlage von Informationen durchzuführen, die aus den durch die Abbildungen der zusätzlichen Objekte (51-55) festgelegten Extraktionsbereichen erhalten wurden,
die Mehrzahl der zusätzlichen Objekte (51-55) transparente Haftnotizen mit unterschiedlichen Farben sind, und
die Eingelesene-Abbildung-Verarbeitungseinheit (22) eingerichtet ist nach Abbildungen der zusätzlichen Objekte (51-55) zu suchen, unter Berücksichtigung der Farbmischung der transparenten Haftnotizen.

2. Bildverarbeitungsvorrichtung (1) nach Anspruch 1, wobei
die Eingelesene-Abbildung-Verarbeitungseinheit (22) eingerichtet ist den Extraktionsbereich, der von den Abbildungen zweier zusätzlicher Objekte (51-55) eingeschlossen ist, zu identifizieren, wenn Abbildungen von zwei zusätzlichen Objekten (51 - 55) einer Art erkannt werden.

3. Bildverarbeitungsvorrichtung (1) nach Anspruch 1, wobei
die Mehrzahl der zusätzlichen Objekte (51-55) Haftnotizen sind, die die gleiche Form, aber unterschiedliche Muster haben.

4. Bildverarbeitungsvorrichtung (1) nach einem der Ansprüche 1 bis 3, wobei
die Verarbeitung mindestens eine ist von:
(a) Erstellung eines Dateinamens einer Datei für die eingelesene Abbildung des Dokuments, auf Grundlage von Informationen die aus dem Extraktionsbereich extrahiert wurden;
(b) Zeichenerkennungs-Verarbeitung die an den aus dem Extraktionsbereich extrahierten Informationen durchgeführt wird; und
(c) Erstellung von Metadaten der Datei auf Grundlage von Informationen die aus dem Extraktionsbereich extrahiert wurden.

5. Bildverarbeitungsvorrichtung (1) nach Anspruch 1, wobei
nachdem die Zusatzobjekt-Registrierungseinheit (21) eine Zuordnung zwischen der Abbildung des zusätzlichen Objekts (51-55) und der Verarbeitung hergestellt und die Abbildung und die damit verbundene Verarbeitung registriert hat, ein Registrierungs-Informationsblatt ausgegeben wird, dass die Abbildung des Zusatzobjekts (51-55) und Positionsinformationen des Extraktionsbereichs enthält.

6. Bildverarbeitungsvorrichtung (1) nach Anspruch 5, wobei
das Registrierungs-Informationsblatt einen zweidimensionalen Code enthält, der die Positionsinformationen des Extraktionsbereich und Informationen über die mit dem Extraktionsbereich verbundene Verarbeitung enthält.

7. Die Bildverarbeitungsvorrichtung (1) nach Anspruch 5, wobei
das Registrierungs-Informationsblatt eine Abbildung in dem Extraktionsbereich enthält, der aus der eingelesenen Abbildung des Dokuments erhalten wurde.

8. Das Bildverarbeitungsgerät (1) nach Anspruch 7, weiter aufweisend:
eine Taste, die verwendet wird, um eine vorbestimmte Funktion auszuführen, als Reaktion auf eine einzelne Betätigung eines Benutzers, wobei
die der Taste zugewiesene Funktion ein Ausgabevorgang des Registrierungs-Informationsblattes ist.

9. Bildverarbeitungsvorrichtung (1) nach Anspruch 1, wobei
die Einstellungs-Anordnung ein Übersetzungs-Spezifikationsfeld (81) enthält, das eingerichtet ist von einem Benutzer verwendet zu werden, um festzulegen, ob eine Übersetzungsregel verwendet werden soll, um eine Mehrzahl ähnlicher Zeichenfolgen im Extraktionsbereich in eine einzige Zeichenfolge zu übersetzen,
wenn die Zusatzobjekt-Registrierungseinheit (21) ermittelt, dass das Übersetzungs-Spezifikationsfeld (81) die Verwendung der Übersetzungsregel vorschreibt,
die Zusatzobjekt-Registrierungseinheit (21) eingerichtet ist die Übersetzungsregel zu erfassen, eine Zuordnung zwischen der Übersetzungsregel und der Abbildung des zusätzlichen Objekts (51-55), das dem Extraktionsbereich zugeordnet ist, herzustellen und die Übersetzungsregel zu registrieren, und
die Eingelesene-Abbildung-Verarbeitungseinheit (22) eingerichtet ist die aus dem Extraktionsbereich erhaltene Zeichenfolge gemäß der mit dem Extraktionsbereich verbundenen Übersetzungsregel zu übersetzen.

10. Bildverarbeitungsvorrichtung (1) nach einem der Ansprüche 1 bis 9, weiter aufweisend:
eine Druckvorrichtung (12), die eingerichtet ist die Einstellungs-Anordnung zu drucken, und eine Abbildung-Lesevorrichtung (13), die eingerichtet ist die eingelesene Abbildung aus der Einstellungs-Anordnung mit dem darauf dargestellten zusätzlichen Objekt (51 - 55) und der eingelesenen Abbildung des Dokuments mit dem darauf platzierten zusätzlichen Objekt (51-55) zu erhalten.

## Revendications

1. Appareil de traitement d'images (1), comprenant :
une unité d'enregistrement d'objet supplémentaire (21) qui est configurée pour se référer à une image lue à partir d'un formulaire de configuration,
le formulaire de configuration comprenant
(a) un champ de spécification d'objet supplémentaire (41) configuré pour être utilisé par un utilisateur pour présenter un objet supplémentaire (51-55) qui est placé sur un document afin de spécifier une zone d'extraction à extraire d'une image lue à partir du document, et
b) un champ de spécification de traitement (42) configuré pour être utilisé par l'utilisateur afin de spécifier le traitement à effectuer sur une information obtenue à partir de la zone d'extraction,
pour identifier une image de l'objet supplémentaire (51-55) présenté dans le champ de spécification d'objet supplémentaire (41) et un traitement spécifié dans le champ de spécification de traitement (42) sur l'image lue du formulaire de configuration, pour établir une association entre l'image de l'objet supplémentaire (51-55) et le traitement, et pour enregistrer l'image de l'objet supplémentaire (51-55) et le traitement qui lui est associé, et
une unité de traitement d'image lue (22) qui est configurée pour rechercher dans l'image lue du document l'image de l'objet supplémentaire (51-55) et pour effectuer le traitement associé à l'image de l'objet supplémentaire (51-55) sur l'information obtenue à partir de la zone d'extraction spécifiée par l'image de l'objet supplémentaire (51-55), où
l'objet supplémentaire (51-55) est une note autocollante ayant une forme, une couleur et un motif prédéterminés,
l'unité de traitement d'image lue (22) est configurée pour rechercher dans l'image lue du document l'image de l'objet supplémentaire (51-55) par correspondance de motifs,
le formulaire de configuration comprend une pluralité de champs de spécification d'objet supplémentaire (41) comprenant le champ de spécification d'objet supplémentaire (41) et une pluralité de champs de spécification de traitement (42) comprenant le champ de spécification de traitement (42), les champs de spécification d'objet supplémentaire (41) étant associés aux champs de spécification de traitement (41), respectivement,
l'unité d'enregistrement d'objet supplémentaire (21) est configurée pour identifier des images des objets supplémentaires (51-55) présentés dans les champs de spécification d'objet supplémentaire (41) et le traitement sélectionné par les champs de spécification de traitement (42) sur l'image lue du formulaire de configuration, pour établir des associations entre les images des objets supplémentaires (51-55) et le traitement, et pour enregistrer les images des objets supplémentaires (51-55) et le traitement qui leur est associé,
l'unité de traitement d'image lue (22) est configurée pour rechercher dans l'image lue du document les images des objets supplémentaires (51-55) et pour effectuer le traitement associé aux images des objets supplémentaires (51-55) sur une information obtenue à partir des zones d'extraction spécifiées par les images des objets supplémentaires (51-55),
la pluralité d'objets supplémentaires (51-55) sont des notes autocollantes transparentes de différentes couleurs, et
l'unité de traitement d'image lue (22) est configurée pour rechercher les images d'objets supplémentaires (51-55) en tenant compte du mélange de couleurs des notes autocollantes transparentes.

2. Appareil de traitement d'images (1) selon la revendication 1, dans lequel
l'unité de traitement d'image lue (22) est configurée pour identifier la zone d'extraction entourée par deux images d'objet supplémentaire (51-55) lors de la détection des deux images d'objet supplémentaire (51-55) d'un même type.

3. Appareil de traitement d'images (1) selon la revendication 1, dans lequel
la pluralité d'objets supplémentaires (51-55) sont des notes autocollantes ayant la même forme, mais des motifs différents.

4. Appareil de traitement d'images (1) selon l'une quelconque des revendications 1 à 3, dans lequel
le traitement est au moins un parmi : (a) la création d'un nom de fichier d'un fichier pour l'image lue du document sur la base d'information extraite de la zone d'extraction ; (b) le traitement de reconnaissance de caractères effectué sur l'information extraite de la zone d'extraction ; et (c) la création de métadonnées du fichier sur la base de l'information extraite de la zone d'extraction.

5. Appareil de traitement d'images (1) selon la revendication 1, dans lequel
après que l'unité d'enregistrement d'objet supplémentaire (21) a établi une association entre l'image de l'objet supplémentaire (51-55) et le traitement et a enregistré l'image et le traitement qui lui est associé, une fiche d'information d'enregistrement contenant l'image de l'objet supplémentaire (51-55) et une information de position de la zone d'extraction est produite.

6. Appareil de traitement d'images (1) selon la revendication 5, dans lequel
la fiche d'information d'enregistrement comprend un code bidimensionnel contenant l'information de position de la zone d'extraction et une information sur le traitement associé à la zone d'extraction.

7. Appareil de traitement d'images (1) selon la revendication 5, dans lequel
la fiche d'information d'enregistrement comprend une image dans la zone d'extraction obtenue à partir de l'image lue du document.

8. Appareil de traitement d'images (1) selon la revendication 7, comprenant en outre :
une touche utilisée pour exécuter une fonction prédéterminée en réponse à une opération unique d'un utilisateur, où
la fonction attribuée à la touche est une opération de sortie de la fiche d'information d'enregistrement.

9. Appareil de traitement d'images (1) selon la revendication 1, dans lequel
le formulaire de configuration comprend un champ de spécification de traduction (81) configuré pour être utilisé par un utilisateur afin de spécifier s'il doit utiliser une règle de traduction pour traduire une pluralité de chaînes de caractères similaires dans la zone d'extraction en une seule chaîne de caractères,
lorsque l'unité d'enregistrement d'objet supplémentaire (21) détecte que le champ de spécification de traduction (81) spécifie d'utiliser la règle de traduction, l'unité d'enregistrement d'objet supplémentaire (21) est configurée pour acquérir la règle de traduction, pour établir une association entre la règle de traduction et l'image de l'objet supplémentaire (51-55) associé à la zone d'extraction, et pour enregistrer la règle de traduction, et
l'unité de traitement d'image lue (22) est configurée pour traduire la chaîne de caractères obtenue à partir de la zone d'extraction selon la règle de traduction associée à la zone d'extraction.

10. Appareil de traitement d'images (1) selon l'une quelconque des revendications 1 à 9, comprenant en outre :
un dispositif d'impression (12) qui est configuré pour imprimer le formulaire de configuration, et un dispositif de lecture d'image (13) qui est configuré pour obtenir l'image lue à partir du formulaire de configuration avec l'objet supplémentaire (51-55) présenté sur celui-ci et l'image lue à partir du document avec l'objet supplémentaire (51-55) placé sur celui-ci.
